# EUROPEAN PATENT APPLICATION

(11) **EP 2 123 452 A1**
(43) Date of publication of application: **25.11.2009**
(21) Application number: 09160180.7
(22) Date of filing: 01.08.2007
(51) Int. Cl.: B32B 27/32, B65D 65/00

(54) **EVOH Barrier Layer For Particulate Coffee**

(30) Priority: 03.08.2006 US 498140
(62) Divisional of application: 07113643.6
(71) Applicant: Kraft Foods Holdings, Inc., Northfield, Illinois 60093 (US)
(72) Inventor: Scarola, Leonard S., Basking Ridge, NJ 07920 (US)
(74) Representative: Smaggasgale, Gillian Helen

(57) **Abstract**

A container and container system are provided to reduce a loss of coffee aroma ingredients from a roasted coffee. The container includes a main body having walls made of a laminate of plastics materials. Contained in the main body is a roasted coffee which naturally releases aromatic ingredients. The laminate includes an outer or structural layer and a thin inner barrier layer, with the inner layer being in close proximity or in contact with the roasted coffee. The body has an Aroma Retention Effectiveness (ARE) of the aromatic ingredients of less than about 30%. Preferably, the outside plastic layer is HDPE, the inner barrier layer is EVOH, and the roasted coffee is fresh roast and ground coffee or roasted whole coffee beans. A method for reducing a loss of aroma ingredients is also disclosed. In accordance with the method, a main body of a container unit is made which includes an outer layer and an inner barrier layer.

## Description

### BACKGROUND OF THE INVENTION

Containers for roast coffee (herein defined as fresh roast and ground coffee particulates or roasted whole coffee beans) have many unique requirements not considered for other containers. For example, roast coffee gives off gases while being stored, and is deleteriously affected by air. Thus, roast coffee containers must prevent the ingress of air and hence be air-tight; but such containers must also be suitably robust to withstand a build-up of pressure, or alternatively, the container must vent the built up gases before a pressure which causes damage (miss-shape or break) to the container is reached. Roast coffee also has oils thereon which rub off on and can be partially absorbed by the container, which oils are thus unable to contribute to the aroma/flavor of the final coffee to be consumed.

While coffee containers were previously generally made of metal (which was easily made robust, air-tight and impervious to oils), new plastic containers, particularly with layered walls, have now been found to be suitable for containing roast coffee. To prevent the off gases and oils from passing through the plastic container, plastic laminates have been used to form the plastic containers which laminates contain a barrier layer such as EVOH (ethylene vinyl alcohol). EVOH is a suitable barrier layer known in the art especially for gaseous O₂, and is sandwiched between other layers in view of its sensitivity to water. This sandwiching includes the use of a tie layer on either side of the EVOH layer to secure the EVOH layer to the adjacent layers.

### BRIEF SUMMARY OF THE INVENTION

While the prior art plastic containers have been popular and do prevent the escape of off gases and oils therethrough, these plastic containers have been subject to absorbing the off gases and/or oils of the roast coffee contained therein. Such absorptions reduce the flavor and aroma of the brewed coffee, and leave a strong odor on the inside of the container. Therefore, in accordance with the present invention, a container system and in particular a container is provided which significantly reduces the aroma and flavor components absorbed by the roast coffee present in the container. In particular, the container or container system includes a main body having walls made of a laminate of plastics materials. Contained in the main body is a quantity of roast coffee which naturally releases aromatic ingredients such as gases and oils. The laminate includes an outer layer and an inner barrier layer, with the inner layer being in contact with the quantity of roast coffee. The body then has an Aroma Retention Effectiveness (ARE) of the aromatic ingredients of less than about 30%.

Preferably, the inner barrier layer is EVOH. Also preferably, the ARE of the body is less than about 20% and the roast coffee is fresh roast and ground coffee or roasted whole coffee beans.

In a preferred embodiment, the outside plastic layer is HDPE having a thickness of between about 30-70 mils; and wherein the EVOH layer has a thickness of between about 0.3-2.0 mils. In another preferred embodiment, the body has an overall thickness. Then the outside plastic layer has a thickness of about 96.75% of that of the overall thickness, and the EVOH layer has a thickness of about 1.6% of that of the overall thickness. In addition, there is a tie layer between the outside plastic layer and the EVOH layer which has a thickness of about 1.75% of that of the overall thickness.

Further in a preferred embodiment, the EVOH layer is in close proximity to the roast coffee. In the close contact embodiment, there is provided a thin adherence layer which is in contact with the roast coffee. The thin adherence layer is preferably HDPE of about 1 mail thickness, and the outside layer is also HDPE. If desired, the outside layer can be a sandwich of two or more polymer layers, such as HDPE and a regrind resin.

In a method for reducing a loss of coffee aroma ingredients from a roast coffee according to the present invention, there is a step of forming a main body of a container with a main plastic layer which would otherwise absorb some of the coffee aroma ingredients. This forming step includes the step of lining an inside of the main plastic layer with a barrier material layer, so that the barrier material layer is closely adjacent the roast coffee and prevents coffee aroma ingredients from being absorbed by the main body of the container which is lined thereby. The main body is thus provided with an ARE of less than about 30%. Next, the roast coffee is stored in the main body.

In accordance with the method, the barrier material layer is formed of EVOH and the roast coffee is stored in contact with the EVOH layer. Alternatively, there is the step of providing the barrier material layer with a thin adherence layer.

In a preferred embodiment of the method, the structural plastic layer is formed to have a thickness of between about 30-70 mils, the EVOH layer is formed to have a thickness of between about 0.3-2.0 mils, and the thin adherence layer is formed to have a thickness of between about 0.5-1.5 mils. Preferably, the thin adherence layer is formed of HDPE to have a thickness of about 1 mil.

Also in a preferred embodiment of the method, the outside plastic layer is formed of HDPE. Alternatively, the outside plastic layer is formed as a sandwich of two or more polymer layers, such as a sandwich of HDPE and a regrind resin.

It is an advantage of the present invention that a container for roast coffee is provided which prevents the off gases and oils from being absorbed thereby so that the roast coffee retains more of its aroma ingredients.

It is also an advantage of the present invention that the containers can be made with only three layers (including a tie layer), which is two less layers than present containers, resulting in lower raw material and capital costs.

Other features and advantages of the present invention are stated in or apparent from detailed descriptions of presently preferred embodiments of the invention as discussed in greater detail below.

### BRIEF DESCRIPTION OF THE SEVERAL VIEWS OF THE DRAWINGS

Figure 1 is a top, right side and rear perspective view of a container system in accordance with the present invention.

Figure 2 is an enlarged cross-sectional view of a portion of a main body wall of the container depicted in figure 1 in accordance with a first embodiment of the present invention.

Figure 3 is a view similar to figure 2 in accordance with a second embodiment of the present invention.

Figure 4 is a view similar to figure 2 in accordance with a third embodiment of the present invention.

Figure 5 is a cross sectional view of a portion of a rim of a main body according to the third embodiment depicted in figure 4.

### DETAILED DESCRIPTION OF THE PREFERRED EMBODIMENTS

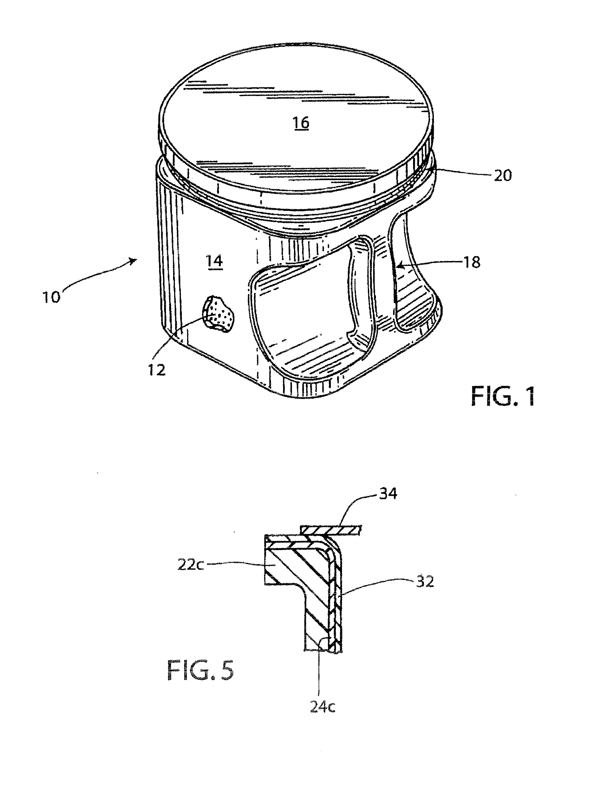

Referring to the drawings, like numerals represent like elements throughout the several views. The present invention is applicable to coffee containers of any shape, such that the actual shape of the container forms no part of the present invention. However, in order to describe the invention, a typical container system 10 is described herein and shown in **figure 1** for containing a quantity of roast coffee 12, which as noted above is defined as roast and ground coffee or roasted whole beans. It will be appreciated that container system 10 as typical in the art includes a main body 14, a replaceable lid 16 for the underlying top opening (not shown) in main body 14, and a peelable foil layer (not shown) which seals the top opening during shipping and before use of roast coffee 12 by the consumer.

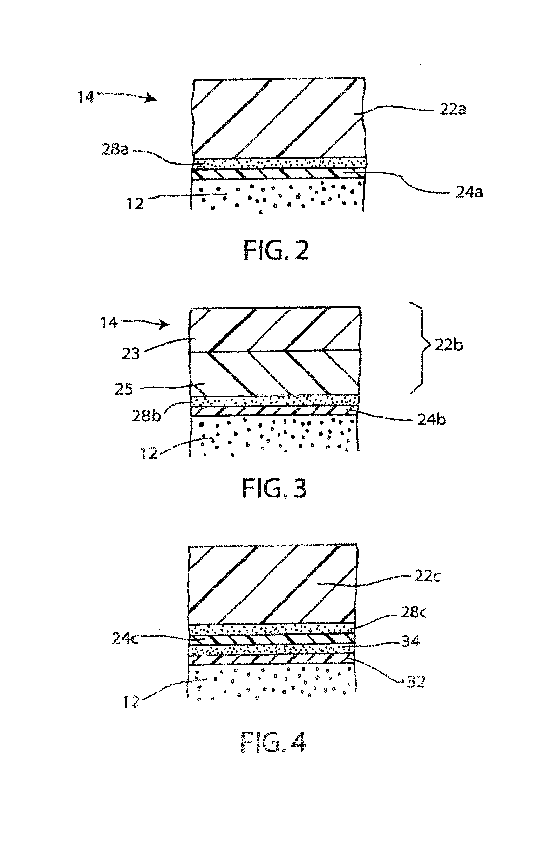

In container system 10, main body 14 includes the four surrounding side walls, a bottom wall, a handle 18 formed in one (rear) side wall, and a top 20 forming a central and circular opening (to which a separate removable lid 16 is removably attached). It will be appreciated that the differently identified parts of main body 14 described above are all integrally formed in a single blow molding operation, with all of main body 14 formed of a laminate wall of plastics materials as shown by the cross section thereof depicted in figures 2-4 depending on the embodiment.

It will also be appreciated that roast coffee 12 naturally releases aromatic off gases and oils after container system 10 is filled with roast coffee 12, so that such aromatic ingredients will come into contact with main body 14 during shipping and storage as well as after container system 10 is opened by the consumer. Such aroma ingredients are beneficial to the taste of the liquid coffee drink produced by the roast coffee, so that reducing as much as possible the loss of such aroma ingredients from the roast coffee is desired. One source of loss of such aroma ingredients in prior art containers was due to absorption by the plastics materials of the main body, as ready evident by the aroma left when the container is emptied.

In order to prevent the absorption, or any substantial absorption of aroma ingredients by main body 14, main body 14 of the present invention is formed as a hollow laminate structure having integral containing walls made of an outer layer 22a and an inner barrier layer 24a as shown in **figure 2****.** Outer layer 22a and inner barrier layer 24a are held together by use of a thin tie layer 28a. Outer layer 22a preferably forms the basic structural component of main body 14, and serves to protect roast coffee 12 from the outside environment. Conveniently, outer layer 22a is made of a blow-molded HDPE (high density polyethylene). In order to prevent the aromatic ingredients released from roast coffee 12 from being absorbed by outer layer 22a, inner barrier layer 24a completely lines outer layer 22a as shown in figure 2. Conveniently, inner barrier layer 24a is made of an EVOH (ethylene vinyl alcohol) copolymer. Tie layer 28a is an adherent or compatibilizer for assuring attachment of inner layer 24a to outer layer 22a, tie layer 28a is conveniently made of TYMOR manufactured by Rohm & Haas or the like.

As known in the art, EVOH serves as a good barrier layer for plastic laminates where O₂ absorption is to be prevented, but it is also known that EVOH is sensitive to water or moisture. For that reason, such EVOH layers have been used in many containers including those for roast coffee, but only in the middle of such plastic laminates due to the sensitivity of EVOH to moisture. However, in accordance with the present invention, an EVOH layer has also been found to provide against absorption of aromatic ingredients, including both off gases and oils. Thus, in accordance with the preferred embodiment of the present invention depicted in figure 2, EVOH is used as a primary inner layer 24a which is contact with roast coffee 12. The EVOH inner layer 24a thus assures that there is little or no absorption of the aroma ingredients taking place in any part of main body 14, and hence the retention by roast coffee 12 of the aroma ingredients is promoted. At this location where roast coffee 12 is being stored, it will be appreciated that there is no problem with moisture or water.

As outer layer 22a forms the structural component of main body 14, outer layer 22a has a thickness of between about 30-70 mils in accordance with the preferred embodiment. Preferably, outer layer 22a is HDPE and comprises about 96.75% of the thickness; and is in the preferred range of 40-60 mils and is most preferably about 50 mils. Outer layer 24a is followed by tie layer 28a which comprises about 1.75% of the thickness. Finally, the inner layer 24a is EVOH which comprises about 1.5% of the thickness. Thus, the preferred container 14 can have an overall wall thickness as desired but within about the above noted ranges.

In an alternative embodiment depicted in **figure 3****,** an outer layer 22b is provided which consists of an outermost virgin HDPE layer 23 and a regrind layer 25 formed from a regrind resin which bind to one another. Inner barrier EVOH layer 24b is adhesively adhered to regrind layer 25 by a tie layer 28b. As inner barrier layer 24b is only concerned with acting as a barrier, the thickness of EVOH inner layer 24b is thinner than that of outer layer 22b and is between about .3 and 2.0 mils. In one preferred embodiment, the thickness of outer layer 22b is about 48.25 mils and that of inner barrier layer 24b is 0.75 mils.

In another alternative preferred embodiment depicted in **figures 4** **and** **5****,** inner barrier layer 24c is immediately adjacent roast coffee 12, but a thin adherence layer 32 is now provided on inner barrier layer 24c so that roast coffee 12 does not actually directly contact inner barrier layer 24c. Adherence layer 32 is preferably a thin polymer layer of a suitable copolymer such as HDPE, LDPE, or polypropylene. Adherence layer 32 is attached to inner barrier layer 24c by a tie layer 34; and likewise inner barrier layer 24c is attached to outer layer 22c by a tie layer 28c (not shown for convenience in figure 5). Adherence layer 32 is used to provide heat sealability for attachment of a (conventional) foil membrane 34 thereto, which foil seal member seals an open top of main body 14.

It will be appreciated that adherence layer 32 is only needed where the open top to which the foil membrane is to be attached is formed by an out-turned upper rim or flange 36 of main body 14 as depicted in figure 5. Without adherence layer 32, inner barrier layer 24c would be upper/outermost at this rim or flange, and inner barrier layer 24c is typically not suitable for attaching the foil membrane thereto. A thickness of thin adherence layer 32 would be between about .5 to 1.5 mils, and preferably about 1 nail or about 3% of the total thickness of main body 14. While some small amount of aroma ingredients might be absorbed by thin adherence layer 32, such would be negligible due to the thinness of adherence layer 32; so that inner barrier layer 24c would still be in close proximity to roast coffee 12 and still serve to prevent the passage of aroma ingredients therethrough and hence into the majority of the laminate wall material of main body 14, namely outer (structural) layer 22c.

An example of the benefit of using an EVOH inner layer is described below. Two sets of round test bottles were prepared. These bottles weighed about 18 grams, were about 23 mils thick, and had a volume of about 400 ml. One set of bottles was made of HDPE having a density of 0.950 grams/cc, and the other set was made of HDPE having the same density of 0.950 grams/cc but additionally with an inner layer of EVOH which was about 3% of the wall thickness. Bottles of each type were flushed with N₂ to mimic actual packaging conditions and then filled with fresh ORIGINAL MAXWELL HOUSE blend roast and ground coffee. Each bottle was sealed with a screw cap and parafilm, and placed in a constant 40°C oven. The bottles were tested after one week of storage by standard GC/MS procedures to determine the absorbed amounts of a standard profile of coffee aromas. The results are shown below:

| Aroma Compound | Absorption of HDPE (in ng/g) | Adsorption of HDPE/EVOH (in ng/g) | EVOH Effectiveness as Barrier |
|---|---|---|---|
| IBA | 1524.50 | 24.63 | 2% |
| 2 Methyl furan | 1814.13 | 55.04 | 3% |
| 3-Methyl butanal | 1381.28 | 191.03 | 14% |
| 2 Methyl butanal | 2562.42 | 459.78 | 18% |
| 2-Pentanone | 57.08 | 16.63 | 29% |
| 2,3 Pentanedione | 726.67 | 23.01 | 3% |
| 2,5-diemthyl furan | 303.89 | 54.27 | 18% |
| Pyrazine | 231.11 | 35.56 | 15% |
| Pyridine | 1817.30 | 176.71 | 10% |
| 2-methyltethydrofuran-3-one | 49.36 | 1.85 | 4% |
| 2 Methyl Pyrazine | 948.58 | 85.46 | 9% |
| Furfural | 657.30 | 89.25 | 14% |
| Furfuryl alcohol | 756.67 | 655.15 | 87% |
| Acetoxyacetone | 46.85 | 8.06 | 17% |
| 2,6 Dimethyl pyrazine | 1126.78 | 129.31 | 11% |
| 5-methyl furfural | 37.57 | 2.20 | 6% |
| Furfuryl acetate | 254.24 | 19.15 | 8% |
| **TOTAL** | **14295.69** | **2028.04** | **16%** |

From the above testing, it will be appreciated that the bottles with the described EVOH barrier layer absorbed only about 16% as much as the PE layer, which is defined herein as the Aroma Retention Effectiveness (ARE) of the bottle composition. It will thus be appreciated that the present invention is designed to provide an ARE for a container of less than about 30%, and preferably below about 20% such as with the above described test container.

It will also be appreciated that while structural layer 22 has been depicted as a single HDPE layer, structural layer 22 could be formed of two or more layers of plastics materials having purposes in addition to forming the structural body 14. For example, there could be a thinner pigmented layer followed by a natural HDPE layer.

Consistent with the above description of container system 10, it will be appreciated that the present invention also includes a method for reducing the loss of coffee aroma ingredients from a roast coffee. This method begins with the step of forming main body 14 of container unit 10 with a main plastic outer layer such as layer 22a which would otherwise absorb some of the coffee aroma ingredients. This forming step then includes the step of lining an inside of the outer layer with a barrier material layer such as inner barrier layer 24a, so that the barrier material layer is closely adjacent the roast coffee and prevents coffee aroma ingredients from being absorbed by the outer layer which is lined thereby. As noted above, this step can be performed in a blow-molding process, and include a tie layer such as tie layer 28 between the main plastic layer and the inner barrier layer. The main body is thus provided with an ARE of less than about 30%. Finally, the roast coffee is delivered into and stored in the main body.

In this method, the barrier material layer is preferably formed of EVOH and the roast coffee is stored in contact with the EVOH layer. Alternatively, there may be a step of providing the barrier material layer with a thin adherence layer as shown in figure 5. Then, in the forming step of the main body, a flange or rim 36 is formed

In the preferred embodiment of the method, the structural plastic layer is formed to have a thickness of between about 30-70 mils, the EVOH layer is formed to have a thickness of between about 0.3-2.0 mils, and the thin adherence layer is formed to have a thickness of between about 0.5-1.5 mils. Preferably, the thin adherence layer, if present, is formed of HDPE to have a thickness of about 1 mil.

Also in a preferred embodiment of the method, the outside plastic layer is formed of HDPE. Alternatively, the outside plastic layer is formed as a sandwich of two or more polymer layers, such as a sandwich of HDPE and a regrind resin.

Although the present invention has been described with respect to exemplary embodiments thereof, it will be understood by those of ordinary skill in the art that variations and modifications can be effected within the scope and spirit of the invention.

## Claims

1. A container for aromatic ingredients comprising:
a main body having walls of a laminate structure including at least a side wall and a bottom wall;
a hollow interior formed by the bottom wall and the side wall of the main body for containing aromatic ingredients;
an outer structural layer of the laminate structure having a thickness sufficient to provide structural support to the main body;
an EVOH inner barrier layer of the laminate structure lining the outer structural layer of the main body and positioned in the main body so that, when aromatic ingredients are received in the hollow interior, the received aromatic ingredients contact the inner barrier layer; and
an aroma retention effectiveness of the main body having the inner barrier layer of EVOH of less than about 30 percent.

2. The container of Claim 1, wherein the laminate structure has an overall thickness that is about 97 to about 99 percent of the outer structural layer and about to about 3 percent of the inner barrier layer.

3. The container of Claim 1 or 2, wherein a ratio of a thickness of the inner barrier layer to a thickness of the outer structural layer is about 1:35 to about 1:100

4. The container of any one of Claims 1 to 3, wherein the laminate structure includes a tie layer joining the inner barrier layer to the outer structural layer.

5. The container of Claim 4, wherein the tie layer is an adherent layer.

6. The container of any one of Claims 1 to 5, wherein the outer structural layer is a high density polyethylene.

7. The container of any one of Claims 1 to 6, wherein the outer structural layer is a composite of high density polyethylene and regrind resin.

8. The container of any one of Claims 1 to 7, wherein the main body has a top wall defining an opening to the hollow interior and a separate, removable lid secured to the opening.

9. The container of Claim 8, further comprising a peelable foil layer sealing the top opening.

10. A container system comprising:
a main body having walls made of a laminate of plastics materials;
a quantity of roasted coffee contained in said main body which roasted coffee naturally releases aromatic gases and oils;
wherein said laminate of plastics materials includes an outer layer structurally forming the container and an attached inner barrier layer of EVOH, said EVOH inner barrier layer being in contact with said quantity of roasted coffee; and
wherein said main body has an ARE of less than about 30 percent.

11. The container system of Claim 10, wherein said outside plastic layer is HDPE having a thickness of between about 30-70 mils; and wherein said EVOH layer has a thickness of between about 0.3-2.0 mils.

12. The container system of Claim 10 or 11, wherein said body has an overall thickness; wherein said outside plastic layer has a thickness of about 96% of that of the overall thickness, and said EVOH layer has a thickness of about 1.5% of that of the overall thickness; and further including a tie layer between said outside plastic layer and said EVOH layer which has a thickness of about 1.7% of that of the overall thickness.

13. The container of any one of Claims 10 to 12, wherein the ARE of said body is less than about 20%.

14. The container of any one of Claims 10 to 13, wherein said quantity of roasted coffee is fresh roast and ground coffee.

15. A container which resists aroma absorption comprising:
a roasted coffee product which gives off aroma ingredients;
a laminate wall material which forms a body of the container; said laminate wall material including a structural plastic layer which structurally forms the container and which serves to initially protect the coffee product from an outside environment, and a barrier layer formed of EVOH which lines said structural plastic layer and which contacts the roasted coffee product, said EVOH layer being of sufficient thickness to substantial prevent the aroma ingredients from passing thereinto and hence from being absorbed by said structural plastic layer;
such that the aroma ingredients given off by the roasted coffee product are substantially not absorbed by said laminate wall material and instead are encouraged to be retained by the roasted coffee product.

16. A method for reducing a loss of coffee aroma ingredients from a roasted coffee product comprising the steps of:
forming a main body of a container with a main plastic layer which would otherwise absorb some of the coffee aroma ingredients, said forming step including the step of lining an inside of the main plastic layer with a barrier material layer of EVOH so that the barrier material layer contacts the coffee product and substantially prevents coffee aroma ingredients from being absorbed by the main body of the container which is lined thereby and so that the main body has an ARE of less than about 30%; and
storing the roasted coffee product in the main body.
